# EUROPEAN PATENT SPECIFICATION

(11) **EP 3 926 112 B1**
(45) Date of publication and mention of the grant of the patent: **24.04.2024**
(21) Application number: 21179570.3
(22) Date of filing: 15.06.2021
(51) Int. Cl.: E03D 11/14, F16B 37/08

(54) **FIXING SUPPORT FOR ANCHORING SUPPORTING FRAMES OF SANITARY FACILITIES TO MASONRY**
BEFESTIGUNGSHALTERUNG ZUR VERANKERUNG VON HALTERAHMEN VON SANITÄREINRICHTUNGEN AN MAUERWERK
SUPPORT DE FIXATION POUR L'ANCRAGE DE CADRES DE SUPPORT D'INSTALLATIONS SANITAIRES À LA MAÇONNERIE

(30) Priority: 17.06.2020 CZ 202037680 U
(43) Date of publication of application: 22.12.2021
(73) Proprietor: Alcadrain s.r.o., 170 00 Praha 7, Holesovice (CZ)
(72) Inventor: Fabicovic, Frantisek, 691 42 Valtice (CZ)
(74) Representative: Musil, Dobroslav

(56) References cited:
- EP-A1- 1 750 021
- EP-A1- 1 975 422
- EP-A1- 3 369 945
- EP-A1- 3 404 152
- US-A1- 2010 166 525

## Description

### Technical field

The invention relates to a fixing support for anchoring the supporting frame of a sanitary facility, in particular of a toilet, bidet, washbasin, shower and urinal, to the masonry, which comprises a connecting pin adapted to be inserted into the supporting frame and to be secured in the supporting frame, the connecting pin being coupled to an anchor screw for fixing to the masonry, the connecting pin is provided at its rear end with a nut which passes through the cavity of a nut lock and which is on its inner side provided with a nut thread into which an outer thread on a shank of the anchor screw fits, whereby the nut lock is reversibly displaceable in the direction of the length of the nut and the nut is on its outer surface provided with inclined ramps adapted to control the clamping of the nut around the anchor screw.

### Background art

A solution of a fixing support is known which comprises a plastic bolt with a head with an inner hexagon, whereby assigned to this bolt is a box-shaped elongated body "L", which is provided with a longitudinal through hole with a partial thread, in which an eccentric nut with an internal thread for said bolt is rotatably mounted about a longitudinal axis. In one position of rotation of this nut, the screw is movable linearly in the longitudinal axis of the hole even without its rotation, while in another rotated position of this nut, the partial thread in the rotating nut and the thread on the bolt interlock, so that the bolt can be moved merely by rotary motion. The disadvantages of this embodiment include the complexity of using a rotating nut with a partial thread, the relatively large dimensions of the box-like elongated body and the presence of the plastic bolt, which together constitute a system with limited strength and stability.

Furthermore, a solution of a fixing support is known, which comprises a metal screw with a markedly shaped fixing attachment forming the head of this screw, whereby a metal housing with a partial internal thread is assigned to the screw, this housing being open from one end to insert the screw into the housing. A safety ring is threaded on the housing. The safety ring is provided in its inner hole with a longitudinal protrusion for pushing the thread on the screw into the thread in the housing by moving the safety ring on the housing in the direction longitudinal to the housing and the screw. The other end of the housing is provided with an extension in the form of a collar or flat head, etc., whereby assigned to this end of the housing with the extension is a plug which is intended to be inserted into the end of the profile of the fixed frame. As a result, the fixing support also attaches to the frame, which is thus better fixed to the masonry. The disadvantages of this configuration include the relative complexity of the solution, production demands and material diversity.

EP 3404152A1 describes a fastening set for fastening a mounting frame for sanitary objects, in particular for a flushing cistern, a toilet bowl and/or a washbasin, to a building wall, the mounting frame being formed from hollow profile rods, with a connecting part which can be detachably connected to the mounting frame, which has a radially projecting connecting section, with a connecting rod which is mounted in the connecting part, with one at one end of the connecting rod attached fastening part which on a building wall can be attached, and with a plug-in part. So that such a fastening set can be produced inexpensively and can be installed quickly and easily without tools, the invention provides that the plug-in part for axially fixing the connecting part on the mounting frame is inserted into an opening in a hollow profile rod of the assembly frame can be used and in the assembled state the connecting part and the hollow profile bar locks to one another.

EP 1750021 A1 describes an adjustable fastening device, in particular for wall-mounting a sanitary fixture installation structure, has a fastening member having a seat extending along an axis; and a connecting rod having an external thread and sliding along the axis inside the seat. The seat is defined by flexible arms projecting from the fastening member and having respective threaded portions; and a lock member is fitted radially outwards onto the arms, and rotates about the axis to cooperate with the arms and cause the threaded portions to engage or release the thread on the rod.

EP 1975422 A1 describes a reinforcing bar locking device that can be easily locked at a position relatively far from an end portion of a reinforcing bar and apply a strong locking force to the reinforcing bar. The reinforcing bar has a body member having a through hole in which the reinforcing bar is insertable and also has a pair of fitting members fitted between the reinforcing bar inserted into the through hole and the inner peripheral surface of the through hole. The inner peripheral surface of the through hole is of a funnel shape whose diameter is reduced in the direction of the center axis. A female screw thread part with which the reinforcing bar engages is formed on the inner peripheral surface of the fitting member. The outer peripheral surface of the fitting member is a conical surface that has surface contact with the inner peripheral surface of the body member. On the outer periphery of the body member, a substantially cylindrical inserting section and a flange section having a larger diameter than the inserting section are provided. Each of the fitting members has a slit opened in the direction of the center axis of the through hole.

US 2010166525 A1 describes a nut assembly comprises a capture nut having a smooth bore adapted to fit around the threads of a threaded member such as a bolt or a threaded rod. The capture nut includes a tapered bowl which defines a hexagon in cross section, for example. The nut assembly further includes a split nut having a surface which snugly mates with the tapered bowl of the capture nut. The split nut engages the threads of the threaded member, but only after the split nut is brought into close proximity to the capture nut, thereby avoiding the need to thread the nut assembly the entire length of the threads of the threaded member. The split nut may be formed to two separable pieces, or it may be formed of two integral halves joined together by a thin membrane.

The object of the invention is to eliminate or at least minimize the disadvantages of the background art.

### Principle of the invention

The object of the invention is achieved by a fixing support for anchoring a supporting frame of a sanitary facility, in particular of a toilet, bidet, washbasin, shower and urinal, to the masonry, whose principle consists in that the nut comprises a pair of opposed longitudinal half-nuts having front end and rear end, whereby the half-nuts are resiliently connected to the rear end of the connecting pin by their front ends, whereby the two half-nuts are separated from each other by a longitudinal gap and each half-nut comprises on its part adjacent to the opposite half-nut at least one nut section with a part of a nut thread.

The advantage of the present invention is its simplicity, reliability and ease of installation and use. It is advantageous also from the point of view of the production, but also in terms of reliability and strength.

In addition, from a production and assembly point of view, it is advantageous if the nut sections on one half-nut are arranged so, that these nut sections alternately abut the external thread on the shank of the anchor screw.

For good control of the clamping of the split nut, it is advantageous if the inclined surfaces have a height which gradually increases from zero at the front end of the split nut at the connecting pin towards the rear end of the split nut, so that in the position of the nut lock at the connecting pin there is a gap between the inner surface of the nut lock hole and the outer surface of the split nut, the gap serving to open the split nut and to allow the anchor screw to slide longitudinally in the split nut even without rotating, whereby in the position of the nut lock at the rear end of the split nut, the inner surface of the nut lock hole presses the nut sections of the split nut against the external thread on the shank of the anchor screw to allow merely rotation of the anchor screw.

For anchoring to the wall, the anchor screw has a bent foot with a through hole at its rear end.

To enable the connecting pin to be firmly attached to the supporting frame and to allow to rotate the pin about its longitudinal axis, it is advantageous if the connecting pin is provided with at least one collar and/or a circumferential groove and fixing support further contains a locking insert adapted to be inserted into the beam of the supporting frame, whereby the locking insert has a front side, on which at least one shaped protrusion and/or a groove corresponding to the collar and/or to the circumferential groove of the connecting pin is created.

### Description of drawings

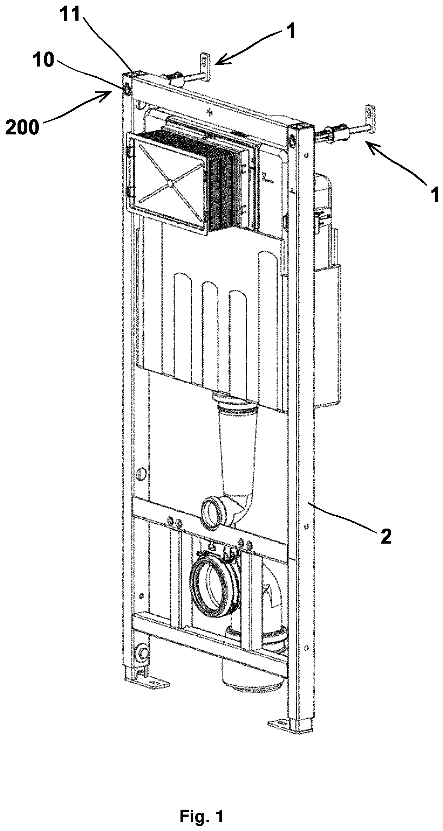

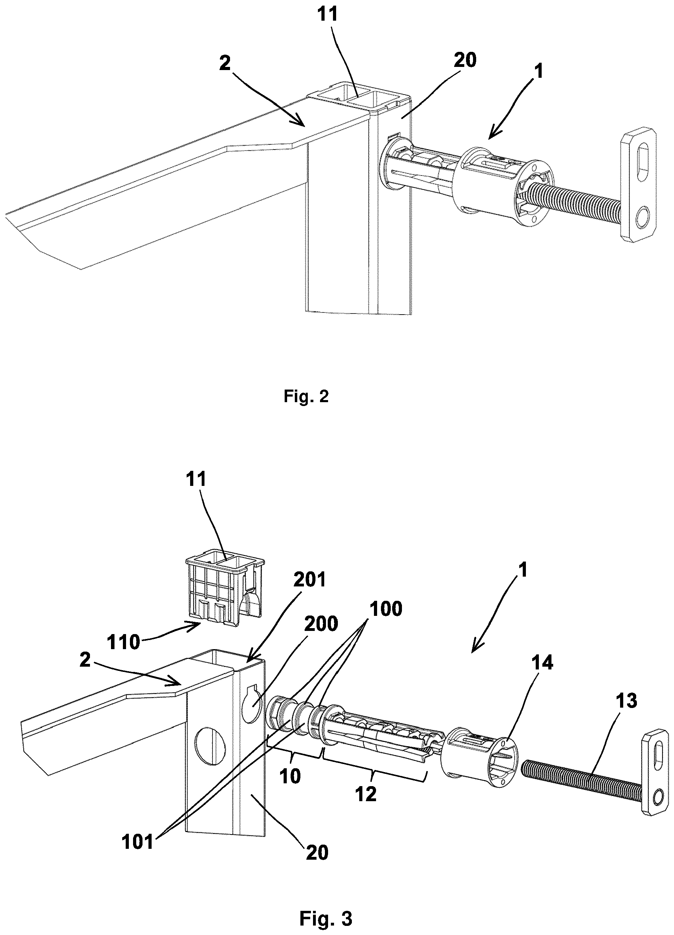

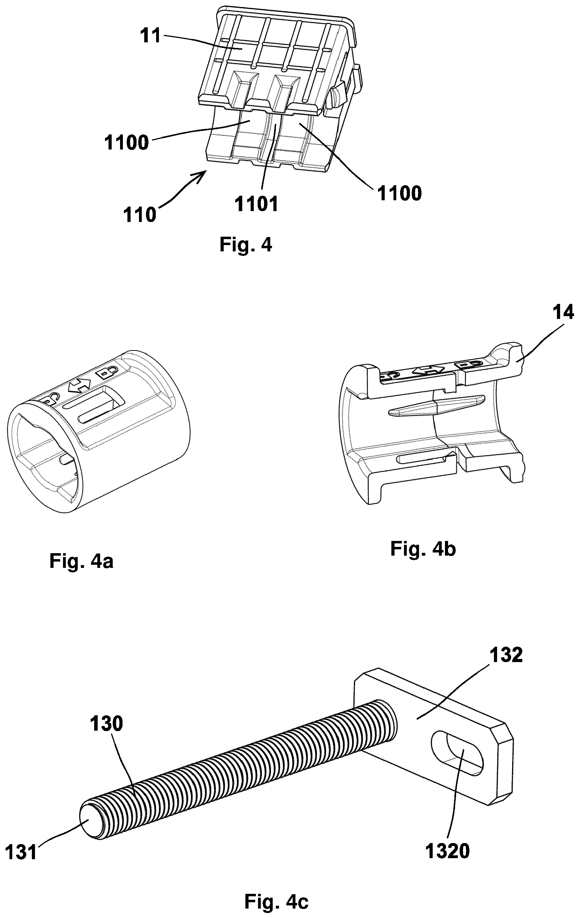

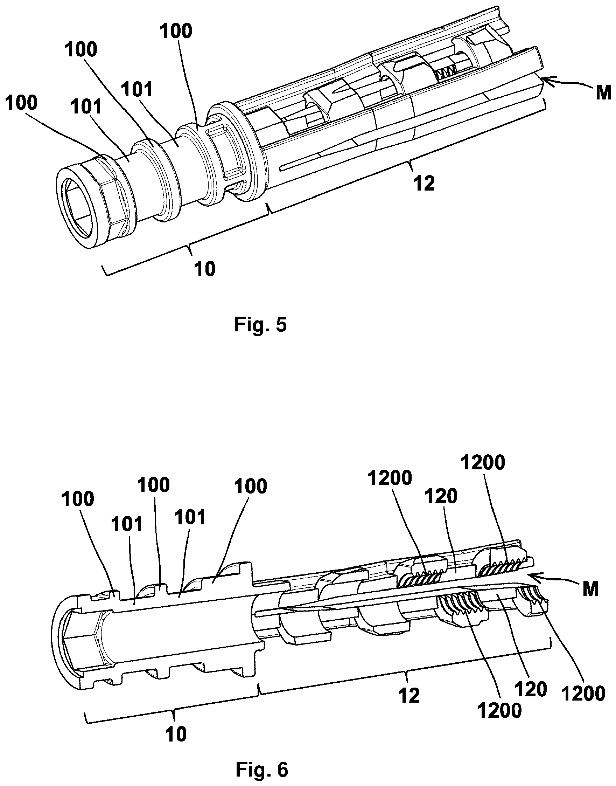

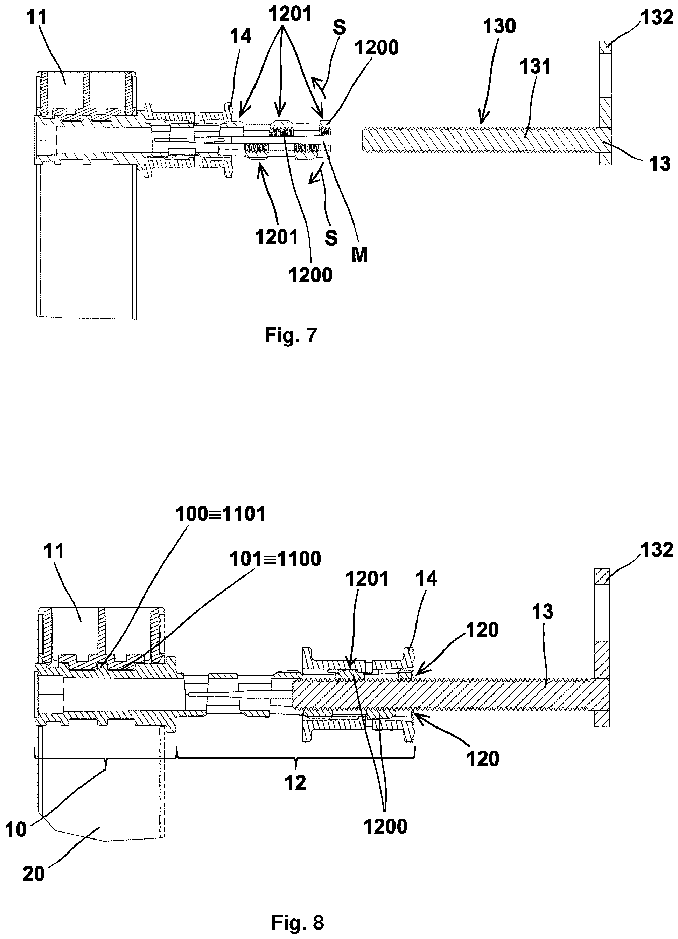

The invention is schematically represented in the drawing, wherein Fig. 1 shows a pre-wall WC module with fixing supports according to the invention, Fig. 2 shows a detail of the a pre-wall WC module with the fixing support according to the invention, Fig. 3 shows an exploded view of the arrangement of the fixing support of Fig. 2, Fig. 4 shows a detail of a locking insert, Fig. 4a shows a detail of a nut lock, Fig. 4b shows a longitudinal section through the nut lock, Fig. 4c shows a detail of a screw, Fig. 5 shows a detail of a connecting pin with a split nut, Fig. 6 shows a longitudinal section through the connecting pin with the split nut of Fig. 5, Fig. 7 shows a longitudinal section through the fixing support with the split nut before the screw insertion and finally, Fig. 8 shows a longitudinal section through the fixing support with a closed split nut and with the inserted screw.

### Examples of embodiment

The invention will be described with reference to an exemplary embodiment of a fixing support **1** for anchoring a supporting frame **2** of a WC module to masonry, whereby it is obvious that the details, parts, principles and functions described below are adequately applied also to a fixing support for anchoring a supporting frame of another sanitary device to masonry, especially for anchoring the supporting frame of bidets, washbasins, showers, urinals, etc.

In the edge of the supporting frame **2,** e.g., in the corners, a through hole **200** is formed in a beam **20** of the supporting frame **2,** the through hole **200** being adapted for insertion of a connecting pin **10** of the fixing support **1** into the inner space of the beam **20.** the connecting pin **10** in the inner space of the beam **20** is secured against spontaneous ejection from the hole **200,** e.g., by means of a locking insert **11,** which is adapted to be inserted into an open end **201** of the beam **2** and for securing the connecting pin **10** against spontaneous ejection from the hole **200** in the beam **20.**

The connecting pin **10** is, for example, provided with at least one, but ideally, with at least two collars **100** and/or circumferential grooves **101,** into which, in the state of being inserted in the beam **20,** shaped intrusions **1101** and/or grooves **1101** on the front **110** of the locking insert **11** fit, as shown in Fig. 4. When the supporting frame **2** is loaded, the locking insert **11** prevents the connecting pin **10** from sliding out in the direction of its longitudinal axis from the beam **20** of the supporting frame **2.** Furthermore, the locking insert **11** provides a pivotal mounting of the connecting pin **10** in the beam **20** of the supporting frame to allow precise adjustment of the distance of the supporting frame **2** from the vertical wall to which the supporting frame **2** is fixed.

At the rear end of the connecting pin **10** is arranged a longitudinal split nut **12** which comprises a pair of half-nuts **120** arranged opposite each other, which are by their front ends resiliently connected to the rear end of the connecting pin **10.** The two half-nuts **120** are separated from each other by a longitudinal gap **M,** whereby each half-nut **120** comprises on its inner part, i.e. on the part adjacent to the opposite half-nut **120,** at least one nut section **1200** with a part **12000** of a nut thread (nut comb). Ideally, the nut sections **1200** on one half-nut **120** are arranged outside a mutually opposite direction relative to the nut sections **1200** on the other half-nut **120,** see Fig. 6, 7 a 8, so that these nut sections **1200** alternately abut the external thread **130** on the shank **131** of the anchor screw **13** described below in different parts of the length of the shank **131** of the anchor screw **13,** see Figs. 6, 7 and 8.

The two half-nuts **120** of the split nut **12** pass together through the cavity of the nut lock **14,** which is mounted on the split nut **12** reversibly displaceable in the direction of the length of the split nut **12,** and whereby the split nut **12,** or the half-nuts **120,** is/are provided on its/their outer surface/s with inclined surfaces **1201,** whose height increases gradually from zero at the front end of the split nut **12** at the connecting pin **10** towards the rear end of the split nut **12,** and so in the position of the nut lock **14** at the connecting pin **10,** see Fig. 7, there is a gap between the inner surface of the hole of the nut lock **14** and the outer surface of the split nut **12** and the two half-nuts **120** can be moved away longitudinally from each other in direction **S** in Fig. 7, whereby both half-nuts **120** are spaced apart by their nut sections **1200** from the external thread **130** on the shank **131** of the anchor screw **13** described below. Consequently, the anchor screw **13** can be moved longitudinally in the split nut **12** even without rotation. On the contrary, in the position of the nut lock **14** at the rear end of the split nut **12,** see Fig. 8, the inner surface of the hole of the nut lock **14** presses the two half-nuts **120** through their nut sections **1200** via the inclined surfaces **1201** against the external thread **130** on the shank **131** of the anchor screw **1** described below, whereby the anchor screw **13** can be moved in the split nut **12** merely by rotation, even with a certain increased resistance due to the pressure of the half-nuts **120** on the shank **131** of the screw **13.** The level of the pressure of the nut sections **1200** of the half-nuts **120** on the external thread **130** on the shank **131** of the anchor screw **13** and the transition between the free longitudinal displacement of the screw **13** and the mere rotation of the screw **13** can be regulated to some extent by the position of the nut lock **14** along the length of the split nut **12.** The nut lock **14** controls the clamping of the split nut **12,** or of the half-nuts **120,** around the screw **13.**

The screw **13** is at its rear end provided with a bent foot **132** with a through hole **1320** for anchoring to the wall.

### Industrial applicability

The invention is particularly applicable in the construction industry for anchoring supporting frames of sanitary installations to masonry, such as the supporting frames of toilet modules, bidets, washbasins, showers, urinals, etc.

## Claims

1. A fixing support for anchoring a supporting frame of a sanitary facility, in particular of a toilet, bidet, washbasin, shower and urinal, to masonry, the fixing support comprising a connecting pin (10), an anchor screw (13), a nut (12) and a nut lock (14) with a cavity, wherein the which connecting pin (10) is adapted to be inserted into the supporting frame (2) and to be locked in the supporting frame (2), wherein the connecting pin (10) is coupled to an anchor screw (13) for fixing to the masonry, wherein the connecting pin (10) is provided at its rear end with the nut (12) which passes through the cavity of the nut lock (14) and which is on its inner side provided with a nut thread into which an outer thread 130 on a shank (131) of the anchor screw (13) fits wherein the nut lock (14) is reversibly displaceable in the direction of the length of the nut (12) and the nut (12) is on its outer surface provided with inclined ramps (1201) adapted to control the clamping of the nut (12) around the anchor screw (13), **characterized in that** the nut (12) comprises a pair of longitudinal half-nuts (120) arranged opposite each other and having front end and rear end, and **in that** the half-nuts (120) are by their front ends resiliently connected to the rear end of the connecting pin (10), the two half-nuts (120) being separated from each other by a longitudinal gap (M) and each half-nut (120) comprising at least one nut section (1200) with a part (12000) of a nut thread on its part adjacent to the opposite half-nut (120).

2. The fixing support according to claim 1, **characterized in that** the nut sections (1200) on the two half-nuts (120) are arranged so, that these nut sections (1200) alternately abut the external thread (130) on the shank (131) of the anchor screw (13).

3. The fixing support according to any of claims 1 or 2, **characterized in that** the inclined surfaces (1201) have a height which gradually increases from zero at the front end of the split nut (12) at the connecting pin (10) to the rear end of the split nut (12), so that in the position of the nut lock (14) at the connecting pin (10), there is a gap between the inner surface of the hole of the nut lock (14) and the outer surface of the split nut (12) for opening the split nut (12) and allowing the anchor screw (13) to move longitudinally in the split nut even without rotating, whereby in the position of the nut lock (14) at the rear end of the split nut (12), the inner surface of the hole of the nut lock (14) presses the nut sections (1200) of the split nut (12) against the external thread (130) on the shank (131) of the anchor screw (13) to allow merely the rotation of the anchor screw (13).

4. The fixing support according to any of claims 1 to 3, **characterized in that** the anchor screw (13) is provided at its rear end with a bent foot (132) with a through hole (1320) for anchoring to the wall.

5. The fixing support according to any of claims 1 to 4, **characterized in that** the connecting pin (10) is provided with at least one collar (100) and/or a circumferential groove (101), and the fixing support further contains a locking insert (11) adapted to be inserted into the beam (20) of the supporting frame (2), wherein the locking insert (11) has a front side (110), on which at least one shaped protrusion (1101) and/or a groove (1101) corresponding to the collar (100) and/or to the circumferential groove (101) of the connecting pin (10) is created.

## Patentansprüche

1. Fixierlehne zur Ankerung eines tragenden Rahmens einer Sanitäreinrichtung, insbesondere WC, Bidet, Waschbecken, Dusche und Pissoir, an Mauerwerk, die Fixierlehne weist Verbindungsstift (10), Ankerschraube (13), Mutter (12) und Muttersicherung (14) mit einem Hohlraum auf, wobei der Verbindungsstift (10) zum Hineinlegen in den tragenden Rahmen (2) und zur Sicherung in dem tragenden Rahmen (2) angepasst ist, wobei der Verbindungsstift (10) mit der Ankerschraube (13) zur Befestigung ans Mauerwerk verkoppelt ist, wobei der Verbindungsstift (10) an seinem hinteren Ende eine Mutter (12) aufweist, die den Hohlraum der Muttersicherung (14) durchgeht, und die an ihrer Innenseite ein Muttergewinde aufweist, in das das Außengewinde (130) auf dem Schaft (131) der Ankerschraube (13) eingreift, wobei die Muttersicherung (14) in der Längenrichtung der Mutter (12) umkehrbar verschiebbar ist und die Mutter (12) auf ihrer Außenoberfläche schräge Rampen (1201) aufweist, die zur Steuerung der Klemmung der Mutter (12) um die Ankerschraube (13) herum angepasst sind, **dadurch gekennzeichnet, dass** die Mutter (12) ein Paar der gegenüberliegend angeordneten Längshalbmuttern (120) aufweist, die ein vorderes Ende und ein hinteres Ende aufweisen und dass die Halbmuttern (120) mit ihrem vorderen Ende mit dem hinteren Ende des Verbindungsstift (10) flexibel verbunden sind, beide Halbmuttern (120) durch einen Längsspalt (M) voneinander getrennt sind und jede Halbmutter (120) mindestens einen Mutterabschnitt (1200) mit einem Teil (12000) des Muttergewindes an seinem der gegenüberliegenden Halbmutter (120) benachbarten Teil aufweist.

2. Fixierlehne nach dem Anspruch 1, **dadurch gekennzeichnet, dass** die Mutterabschnitte (1200) auf zwei Halbmuttern (120) derart angeordnet sind, dass diese Mutterabschnitte (1200) auf das Außengewinde (130) auf dem Schaft (131) der Ankerschraube (13) abwechselnd anliegen.

3. Fixierlehne nach einem der Ansprüche 1 oder 2, **dadurch gekennzeichnet, dass** die schrägen Rampen (1201) solche Höhe aufweisen, die sich allmählich von Null am vorderen Ende der Spreizmutter (12) am Verbindungsstift (10) zum hinteren Ende der Spreizmutter (12) hin erhöht, sodass in der Lage der Muttersicherung (14) bei Verbindungsstift (10) zwischen der inneren Fläche der Öffnung der Muttersicherung (14) und der äußeren Fläche der Spreizmutter (12) ein Spalt zum Spreizen der Spreizmutter (12) und zum Ermöglichen einer Längsverschiebung der Ankerschraube (13) in der Spreizmutter (12) auch ohne Drehen vorliegt, wobei in der Lage der Muttersicherung (14) bei hinteren Ende der Spreizmutter (12) die innere Fläche der Öffnung der Muttersicherung (14) die Mutterabschnitte (1200) der Spreizmutter (12) auf das Außengewinde (130) auf dem Schaft (131) der Ankerschraube (13) zum Ermöglichen von nur Drehen der Ankerschraube (13) zudrückt.

4. Fixierlehne nach einem der Ansprüche 1 bis 3, **dadurch gekennzeichnet, dass** die Ankerschraube (13) an ihrem hinteren Ende einen Eingewickelt Fuß (132) mit einer Durchgangsöffnung (1320) zur Ankerung an die Wand aufweist.

5. Fixierlehne nach einem der Ansprüche 1 bis 4, **dadurch gekennzeichnet, dass** der Verbindungsbolzen (10) mindestens einen Anstoß (100) und/oder eine Umfangsnut (101) aufweist, und die Fixierlehne ferner eine Steckdosensicherung (11) aufweist, die zum Hineinschieben in den Träger (20) des tragenden Rahmens (2) angepasst ist, wobei die Steckdosensicherung (11) eine Stirnseite (110) aufweist, auf der mindestens ein Formvorsprung (1101) und/oder eine Nut (1101) gebildet ist, die dem Anstoß (100) und/oder der Umfangsnut (101) auf dem Verbindungsstift (10) entspricht.

## Revendications

1. Support de fixation pour ancrage d'un cadre de support d'un dispositif sanitaire, en particulier un WC, un bidet, un lavabo, une douche et un urinoir, à un mur en maçonnerie, le support de fixation comprenant une broche de connexion (10), un boulon d'ancrage (13), un écrou (12) et un verrou d'écrou (14) à cavité, tandis que la broche de connexion (10) est adaptée pour être insérée dans le cadre de support (2) et pour être fixée dans le cadre de support (2), tandis que la broche de connexion (10) est couplée au boulon d'ancrage (13) pour assurer la fixation au mur, tandis que la broche de connexion (10) étant pourvue à son extrémité arrière d'un écrou (12) qui traverse la cavité du verrou d'écrou (14) et qui est pourvu sur sa surface intérieure d'un filetage d'écrou dans lequel le filetage extérieur (130) de la tige (131) du boulon d'ancrage (13) s'enclenche, tandis que le verrou d'écrou (14) est mobile de manière réversible dans la direction de la longueur de l'écrou (12) et l'écrou (12) est pourvu sur sa surface extérieure de rampes inclinées (1201), adaptées pour contrôler le serrage de l'écrou (12) autour du boulon d'ancrage (13), **caractérisé en ce que** l'écrou (12) comprend une paire de demi-écrous longitudinaux (120) disposés de manière opposée, avec une extrémité avant et une extrémité arrière, et que les demi-écrous (120) sont reliés de manière flexible par leur extrémité avant à l'extrémité arrière de la broche de connexion (10), les deux demi-écrous (120) étant séparés l'un de l'autre par un écartement longitudinal (M), et chaque demi-écrou (120) comprend au moins une section d'écrou (1200) avec une partie (12000) du filetage de l'écrou sur sa partie adjacente au demi-écrou opposé (120).

2. Support de fixation selon la revendication 1, **caractérisé en ce que** les sections d'écrou (1200) sur les deux demi-écrous (120) sont disposées de façon à ce que ces sections d'écrou (1200) viennent alternativement en butée sur le filetage extérieur (130) de la tige (131) du boulon d'ancrage (13).

3. Support de fixation selon l'une des revendications 1 ou 2, **caractérisé en ce que** les rampes inclinées (1201) ont une hauteur qui augmente progressivement de zéro à l'extrémité avant de l'écrou expansible (12) au niveau de la broche de connexion (10) jusqu'à l'extrémité arrière de l'écrou à expansion (12), de telle façon que dans la position du verrou d'écrou (14) au niveau de la broche de connexion (10) se trouve un espace entre la surface intérieure de la cavité du verrou d'écrou (14) et la surface extérieure de l'écrou à expansion (12) qui permet à l'écrou à expansion (12) de s'ouvrir et qui permet le mouvement longitudinal du boulon d'ancrage (13) dans l'écrou à expansion (12), même sans rotation, tandis que dans la position du verrou d'écrou (14) à l'extrémité arrière de l'écrou à expansion (12), la surface intérieure de la cavité du verrou d'écrou (14) appuie sur les sections d'écrou (1200) de l'écrou à expansion (12) contre le filetage extérieur (130) sur la tige (131) du boulon d'ancrage (13) pour permettre uniquement la rotation du boulon d'ancrage (13).

4. Support de fixation selon l'une des revendications de 1 à 3, **caractérisé en ce que** le boulon d'ancrage (13) est pourvu à son extrémité arrière d'un pied coudé (132) avec passage (1320) qui permet son ancrage au mur.

5. Support de fixation selon l'une des revendications de 1 à 4, **caractérisé en ce que** la broche de connexion (10) est pourvue d'au moins un collet (100) et/ou d'une rainure circonférentielle (101), et le support de fixation comprend en outre un embout de sécurité (11) adapté pour être inséré dans la poutre (20) du cadre de support (2), tandis que l'embout de sécurité (11) présente une face (110) sur laquelle au moins une saillie (1101) et/ou une rainure (1101) correspondant au collet (100) et/ou à la rainure circonférentielle (101) est formée sur la broche de connexion (10).
